# EUROPEAN PATENT APPLICATION

(11) **EP 3 232 343 A1**
(43) Date of publication of application: **18.10.2017**
(21) Application number: 17166875.9
(22) Date of filing: 18.04.2017
(51) Int. Cl.: G06F 17/30

(54) **METHOD AND APPARATUS FOR MANAGING VIDEO DATA, TERMINAL, AND SERVER**

(30) Priority: 15.04.2016 CN 201610237291
(71) Applicant: Beijing Xiaomi Mobile Software Co., Ltd., Beijing 100085 (CN)
(72) Inventor: WANG, Da, Haidian District, Beijing 100085 (CN); XIE, Yan, Haidian District, Beijing 100085 (CN); CHENG, Yue, Haidian District, Beijing 100085 (CN)
(74) Representative: Robson, Aidan John

(57) **Abstract**

The present disclosure provides a method and an apparatus for managing video data, a terminal, and a server. In an embodiment, the method includes: detecting (201) whether an accident happens to a first vehicle; when it is detected that the accident happens to the first vehicle, sending (202) to a server a first request for acquiring first video data, the first video data being driving record data of a second vehicle within a predetermined time period around happening of the accident, the second vehicle being a vehicle within a predetermined range around the first vehicle when the accident happens; and receiving (203) the first video data returned from the server. The embodiment can avoid the waste of valid data and increase the effective usage rate of car recorders.

## Description

### TECHNICAL FIELD

The present disclosure relates to the field of terminal technologies, and more particularly, to a method and an apparatus for managing video data, a terminal, and a server.

### BACKGROUND

With the constant development of the technology, the vehicles become increasingly advanced and convenient for people's travel. Today, automobile is the most important vehicle for people's daily life. Generally speaking, people usually install a car recorder on their own cars as supporting evidence in case of the traffic accident. However, sometimes it's difficult to identify the cause of a traffic accident only through the video data collected by the recorder of the accident car, thereby requiring more videos from other visual angles for multi-orientational analysis. But apparently, finding vehicles passing by as the accident happens is very difficult. Therefore, it is hard to acquire the video data collected by car recorders of the majority of the accident-relevant vehicles, resulting in the waste of a large quantity of valid data, thereby reducing the effective usage rate of the car recorders.

### SUMMARY

Embodiments of the present disclosure provide a method and an apparatus for managing video data, a terminal, and a server, to solve the problem about a low rate of the effective usage of the car recorder in related arts.

According to a first aspect of embodiments of the present disclosure, a method for managing video data is provided. The method includes:
detecting whether an accident happens to a first vehicle;
when it is detected that the accident happens to the first vehicle, sending to a server a first request for acquiring first video data, the first video data being driving record data of a second vehicle within a predetermined time period around happening of the accident, the second vehicle being a vehicle within a predetermined range around the first vehicle when the accident happens; and
receiving the first video data returned from the server.

In an embodiment, said detecting whether an accident happens to a first vehicle includes:
acquiring driving data of the first vehicle; and
detecting whether an abnormality occurs in the driving data; and if an abnormality occurs in the driving data, determining that the accident happens to the first vehicle.

In an embodiment, said acquiring driving data of the first vehicle includes:
acquiring data collected by a gyro sensor as the driving data.

In an embodiment, the method further includes:
acquiring, as second video data, driving record data of the first vehicle within a predetermined time period around happening of the accident; and
sending the second video data to the server to be stored therein.

According to a second aspect of embodiments of the present disclosure, a method for managing video data is provided. The method includes:
receiving, from a first terminal corresponding to a first vehicle, a first request for acquiring first video data;
acquiring, as first video data, driving record data of a second vehicle within a predetermined time period around happening of the accident, the second vehicle being a vehicle within a predetermined range around the first vehicle when the accident happens; and
returning the first video data to the first terminal.

In an embodiment, the first request includes a search condition of a second vehicle;
said acquiring driving record data of a second vehicle within a predetermined time period around happening of an accident includes:
obtaining the search condition from the first request;
searching for the second vehicle according to the search condition;
sending, to a second terminal corresponding to the second vehicle, a second request for acquiring driving record data of the second vehicle within a predetermined time period around happening of the accident; and
receiving the driving record data returned by the second terminal.

In an embodiment, the method further includes:
storing the first video data in accident video data.

In an embodiment, the method further includes:
receiving, as second video data, driving record data of the first vehicle within a predetermined time period around happening of the accident, which is sent by the first terminal; and
storing the second video data in accident video data.

In an embodiment, the method further includes:
receiving a searching condition of accident video data sent by a terminal;
searching for, from pre-stored accident video data, target accident video data matching with the searching condition; and
returning the searched target accident video data.

According to a third aspect of embodiments of the present disclosure, an apparatus for managing video data is provided. The apparatus includes:
a detection module, configured to detect whether an accident happens to a first vehicle;
a first sending module, configured to when it is detected that the accident happens to the first vehicle, send to a server a first request for acquiring first video data, the first video data being driving record data of a second vehicle within a predetermined time period around happening of the accident, the second vehicle being a vehicle within a predetermined range around the first vehicle when the accident happens; and
a receiving module, configured to receive the first video data returned from the server.

In an embodiment, the detection module includes:
an acquiring sub-module, configured to acquire driving data of the first vehicle;
a detection sub-module, configured to detect whether an abnormality occurs in the driving data; and if an abnormality occurs in the driving data, determine that the accident happens to the first vehicle.

In an embodiment, the acquiring sub-module includes:
a data collection sub-module, configured to acquire data collected by a gyro sensor as the driving data.

In an embodiment, the apparatus further includes:
an acquiring module, configured to acquire, as second video data, driving record data of the first vehicle within a predetermined time period around happening of the accident; and
a second sending module, configured to send the second video data to the server to be stored therein.

According to a fourth aspect of embodiments of the present disclosure, an apparatus for managing video data is provided. The apparatus includes:
a first receiving module, configured to receive, from a first terminal corresponding to a first vehicle, a first request for acquiring first video data;
an acquiring module, configured to acquire, as first video data, driving record data of a second vehicle within a predetermined time period around happening of the accident, the second vehicle being a vehicle within a predetermined range around the first vehicle when the accident happens; and
a first sending module, configured to return the first video data to the first terminal.

In an embodiment, the first request comprises a search condition of a second vehicle;
the acquiring module includes:
a condition acquiring sub-module, configured to obtain the search condition from the first request;
a searching sub-module, configured to search for the second vehicle according to the search condition;
a sending sub-module, configured to send to a second terminal corresponding to the second vehicle a second request for acquiring driving record data of the second vehicle within a predetermined time period around happening of the accident; and
a receiving sub-module, configured to receive the driving record data returned by the second terminal.

In an embodiment, the apparatus further includes:
a first storage module, configured to store the first video data in accident video data.

In an embodiment, the apparatus further includes:
a second receiving module, configured to receive, as second video data, driving record data of the first vehicle within a predetermined time period around happening of the accident, which is sent by the first terminal;
a second storage module, configured to store the second video data in accident video data.

In an embodiment, the apparatus further includes:
a third receiving module, configured to receive a searching condition of accident video data sent by a terminal;
a searching module, configured to search for, from pre-stored accident video data, target accident video data matching with the searching condition; and
a second sending module, configured to return the searched target accident video data.

According to a fifth aspect of embodiments of the present disclosure, a terminal is provided. The terminal includes:
a processor;
a memory for storing instructions executable by the processor;
wherein the processor is configured to perform:
   detecting whether an accident happens to a first vehicle;
   when it is detected that the accident happens to the first vehicle, sending to a server a first request for acquiring first video data, the first video data being driving record data of a second vehicle within a predetermined time period around happening of the accident, the second vehicle being a vehicle within a predetermined range around the first vehicle when the accident happens; and
   receiving the first video data returned from the server.

According to a sixth aspect of embodiments of the present disclosure, a server is provided. The server includes:
a processor;
a memory for storing instructions executable by the processor;
wherein the processor is configured to perform:
   receiving, from a first terminal corresponding to a first vehicle, a first request for acquiring first video data;
   acquiring, as first video data, driving record data of a second vehicle within a predetermined time period around happening of the accident, the second vehicle being a vehicle within a predetermined range around the first vehicle when the accident happens; and
   returning the first video data to the first terminal.

According to a seventh aspect of embodiments of the present disclosure, there is provided a computer program which, when being executed on a processor of an apparatus, performs any one of the above methods.

The technical solutions provided in embodiments of the present disclosure may have the following beneficial effects.

According to the above method for managing video data, when it is detected that the accident happens to the first vehicle, to acquire, from a server, driving record data of other vehicles within a predetermined time period around happening of the accident, the other vehicles are vehicles within a predetermined range around the first vehicle when the accident happens. Accordingly, it could be as much as possible to gather the accident-related video data collected by car recorders, thereby avoiding the waste of valid data and increasing the effective usage rate of the car recorders.

According to the above method for managing video data, when an accident happens to a first vehicle, to acquire, from a second vehicle, driving record data within a predetermined time period around happening of the accident, and send the above driving record data to the first vehicle. Accordingly, it could be as much as possible to gather the accident-related video data collected by car recorders, thereby avoiding the waste of valid data and increasing the effective usage rate of the car recorders.

It is to be understood that both the foregoing general description and the following detailed description are exemplary and explanatory only and are not restrictive of the present disclosure, as claimed.

### BRIEF DESCRIPTION OF THE DRAWINGS

The accompanying drawings herein, which are incorporated into and constitute a part of the specification, illustrate embodiments consistent with the present disclosure, and together with the description, serve to explain the principles of the present disclosure.
FIG. 1 is a schematic structural diagram of an exemplary system for applying an embodiment of the present disclosure according to an exemplary embodiment;
FIG. 2 is a flowchart illustrating a method for managing video data according to an exemplary embodiment;
FIG. 3A is a flowchart illustrating a method for managing video data according to another exemplary embodiment;
FIG. 3B is a scenario diagram for video data management according to an exemplary embodiment;
FIG. 4 is a block diagram of an apparatus for managing video data according to an exemplary embodiment;
FIG. 5 is a block diagram of an apparatus for managing video data according to another exemplary embodiment;
FIG. 6 is a block diagram of an apparatus for managing video data according to another exemplary embodiment;
FIG. 7 is a block diagram of an apparatus for managing video data according to another exemplary embodiment;
FIG. 8 is a block diagram of an apparatus for managing video data according to another exemplary embodiment;
FIG. 9 is a block diagram of an apparatus for managing video data according to another exemplary embodiment;
FIG. 10 is a block diagram of an apparatus for managing video data according to another exemplary embodiment;
FIG. 11 a block diagram of an apparatus for managing video data according to another exemplary embodiment;
FIG. 12 a block diagram of an apparatus for managing video data according to another exemplary embodiment; and
FIG. 13 is a schematic structural diagram illustrating an apparatus for managing video data according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terminology used in the present disclosure is for the purpose of describing particular embodiments only and is not intended to limit the present disclosure. As used in the present disclosure and the appended claims, the singular forms "a", "an" and "the" are intended to include the plural forms as well, unless the context clearly indicates otherwise. It shall also be understood that the term "and/or" used herein is intended to signify and include any or all possible combinations of one or more of the associated listed items.

It shall be understood that, although the terms "first", "second", "third", etc. may be used herein to describe various information, the information should not be limited by these terms. These terms are only used to distinguish one category of information from another. For example, without departing from the scope of the present disclosure, first information may be termed as second information; and similarly, second information may also be termed as first information. As used herein, the term "if" may be understood to mean "when" or "upon" or "in response to determining" depending on the context.

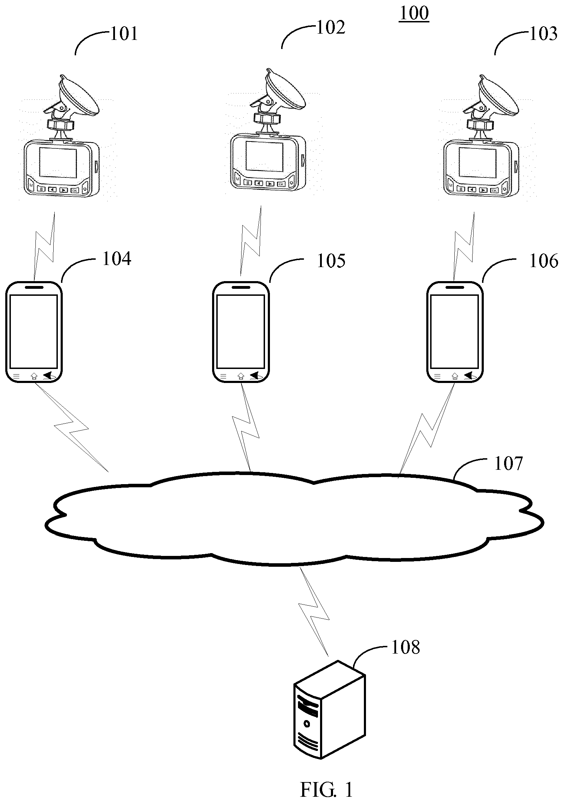

FIG. 1 is a structure diagram of an exemplary system for applying an embodiment of the present disclosure according to an exemplary embodiment.

As shown in FIG. 1, a system structure 100 may include: driving recorder apparatuses 101, 102, 103; terminal apparatuses 104, 105, 106; a network 107 and a server 108.

The driving recorder apparatuses 101, 102, 103 are used for collecting driving record data, and may communicate with the terminal apparatuses 104, 105, 106 by Bluetooth channel, infrared channel, Wifi channel, NFC (Near Field Communication) channel or the like, so as to receive or send a request or information and the like.

The network 107 is configured to provide medium of communication link between the terminal apparatuses 104, 105, 106 and the server 108. The network 107 may include various types of connection such as wire communication link, wireless communication link, fiber optic cable and the like.

By the network 107, the terminal apparatuses 104, 105, 106 may interact with the server 108 to receive or send a request or information and the like. The terminal apparatuses 104, 105, 106 could be various kinds of electronic apparatus, which include but not limit to mobile terminal of smart phone, smart wearable apparatus, tablet, personal digital assistant and the like. The server 108 may be a server which provides many kinds of service. Also, the server 108 may process (such as store, analyze and the like) received data and feed a result back to a terminal apparatus. The server may response to a request of a user to provide a service. It is understood that a server could provide one or more kinds of service, or one service could be provided by one or more servers.

It shall be understood that the number of car recorder, terminal apparatus, network and server is for the purpose of convenient description, there could be any number of car recorder, terminal apparatus, network and server based on actual demand.

According to the system structure shown in FIG. 1, in this embodiment, the terminal apparatuses 104, 105, 106 detect whether an accident happens to a vehicle of which respectively contains the terminal apparatuses 104, 105, 106 therein. When the terminal apparatus 104, 105 or 106 detects that an accident happens to a vehicle of which contains the terminal itself, by the network 107, it may send to the server 108 a request for acquiring first video data, the first video data being driving record data of other vehicle within a predetermined time period around happening of the accident, the other vehicle being a vehicle within a predetermined range around the above vehicle when the accident happens. The server 108 acquires the first video data to be stored therein and returns the first video data to the terminal apparatus 104, 105 or 106. In addition, the terminal apparatus 104, 105 or 106 may further acquire, from the driving recorder apparatus101, 102 or 103 connected with itself, the driving record data within the predetermined time period around happening of the accident as second video data, subsequently sends the second video data to the server 108 by the network 107 so that the server 108 stores the second video data.

The present application will be described in detail by combining an exemplary embodiment hereafter.

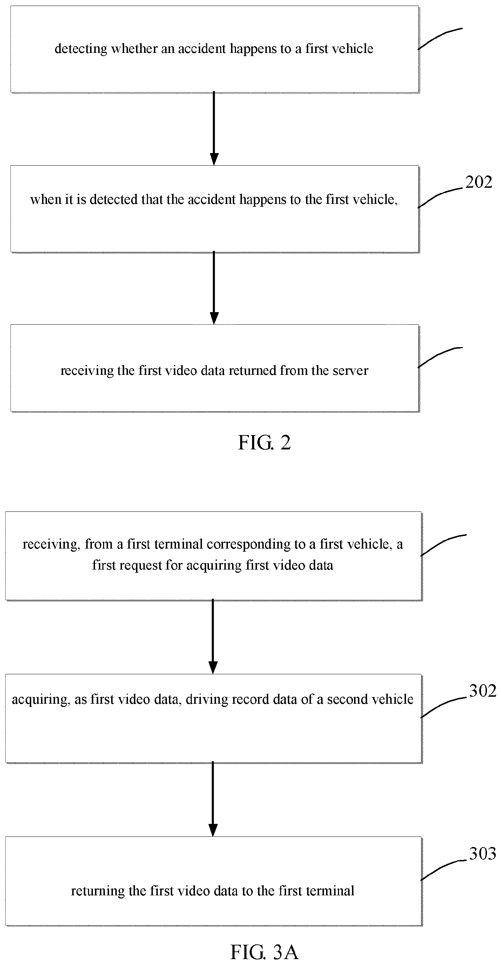

FIG. 2 is a flowchart illustrating a method for managing video data according to an exemplary embodiment. The method may be applied to a terminal. In the embodiment, in order to be easily understood, following descriptions for example combine a terminal apparatus having a function of displaying video. For the person skilled in related art, it should be understood that the terminal apparatus includes but not limits to mobile terminal of smart phone, smart wearable apparatus, tablet, personal digital assistant and the like. The method includes the following steps.

In step 201, detect whether an accident happens to a first vehicle.

In the embodiment, the terminal having a communication connection with a car recorder installed in the first vehicle detects whether an accident happens to a first vehicle in real time. Specifically, the foregoing detecting may acquire driving data of the first vehicle, for example, may be acquiring data collected by a gyro sensor of the terminal as the driving data, or building communication connection between the terminal and the first vehicle to acquiring data, as the driving data, collected by a sensor installed in the vehicle, the sensor being used for detecting shock of the vehicle and driving state of the vehicle. It shall be understood that the detecting may acquire, as the driving data, any other data which could reflect the driving state of the first vehicle, and the present disclosure would not limit the specific form of the driving data and the way of acquiring the driving data thereof.

Subsequently, detect whether an abnormality occurs in the driving data; and if an abnormality occurs in the driving data, determine that the accident happens to the first vehicle. Generally speaking, when an accident happens, acceleration of the vehicle changes a lot, such as magnitude of acceleration of the vehicle or direction of acceleration of vehicle changes, thereby, this feature could be used to detect the occurrence of an accident. For example, assume that data collected by a gyro sensor in a terminal is as the driving data, it could process the data to obtain any accelerations of the first vehicle in all directions, and subsequently analyze the above data by a preset accident data characteristic model or a preset regulation to determine whether an abnormality occurs in the driving data. If the acceleration changes a lot, such as the magnitude of the acceleration in a direction exceeds a preset limitation or the direction of the acceleration changes a lot suddenly, determine an abnormality occurs in the driving data.

In other hand, when an accident happens, a strong shock may happen to a vehicle, thereby, this feature could be used to detect the occurrence of an accident. For example, assume that data collected by a sensor installed in the vehicle is as the driving data, the sensor being used for detecting shock of the vehicle and driving state of the vehicle, and subsequently analyze the data to determine whether a strong shock happens to the first vehicle. If a strong shock happens to the first vehicle, determine that an accident happens to the first vehicle.

In step 202, when it is detected that the accident happens to the first vehicle, send a first request to a server.

In the embodiment, the first request is for acquiring first video data, and the first video data is driving record data of a second vehicle within a predetermined time period around happening of the accident, and the second vehicle is a vehicle within a predetermined range around the first vehicle when the accident happens.

Generally speaking, in order to have a multi-orientational analysis for causes of an accident, besides the driving data of the vehicle occurring an accident, it is necessary to obtain the driving data collected from other angles. The driving data may include video data collected by a car recorder. When an accident happens, a vehicle within a predetermined range around the vehicle which the accident happens to may collect video data which is relevant to the accident. Thereby, after the accident happens to the vehicle, it could obtain by a terminal the driving record data collected by a vehicle within a predetermined range around the vehicle occurring the accident.

In the embodiment, the predetermined time period may be any reasonable time period. For example, it may start before the accident with a 3-minutes or a 1-minute time period and may end correspondingly after the accident with a 3-minutes or a 1-minute time period. Also, it may start before the accident with a 1-minute time period and may end after the accident with a 2-minutes time period. The present disclosure doesn't limit to it thereof.

In the embodiment, the predetermined range may not be limited if it is reasonable. The predetermined range includes the position of the first vehicle which an accident happens to. For example, the range may be a circular scope which is centered on the position where an accident happens to the first vehicle and have a 20-meters radius. Or, the range may be centered on the position where an accident happens to the first vehicle and have a rectangular scope with a 20-meters length of side. Or the range may be centered on the position where an accident happens to the first vehicle and be scope of the road whose length is 20 meters. The present disclosure doesn't limit to it thereof.

In the embodiment, the first request may include information of the first vehicle which is about the location and the time at the time of which the accident happens, so as to search for a second vehicle according to the information of the first vehicle which is about the location and the time at the time of which the accident happens and acquire driving record data of the second vehicle which is as the first video data.

In step 203, receive the first video data returned from the server.

In the embodiment, when the first video data is acquire, the server sends the first video data to a terminal corresponding to the vehicle which an accident happens to.

According to the above method for managing video data, when it is detected that the accident happens to the first vehicle, acquire, from a server, driving record data of other vehicles within a predetermined time period around happening of the accident, and the other vehicles are vehicles within a predetermined range around the first vehicle when the accident happens. Accordingly, it could be as much as possible to gather the accident-related video data collected by car recorders, thereby avoiding the waste of valid data and increasing the effective usage rate of the car recorders.

In an optional embodiment, the above method further includes: acquiring, as second video data, driving record data of the first vehicle within a predetermined time period around happening of the accident; sending the second video data to the server to be stored therein.

Generally speaking, the video data collected by a car recorder installed in a vehicle which an accident happens to could be an important evidence and an important reference of the accident data as well. Accordingly, in the embodiment, driving record data of the first vehicle within a predetermined time period around happening of the accident may be as second video data and be sent to the server. Meanwhile, the information of the first vehicle which is about the location and the time at the time of which the accident happens may be sent to the server so that the server could store the second video data and the above information with a correspondence between them.

In the embodiment, by Bluetooth, infrared, Wifi and the like, a terminal corresponding to the first vehicle may build an communication connection with a car recorder installed in the first vehicle, and sends an acquiring video request which includes start instant and end instant of a predetermined time period. After the car recorder of the first vehicle receives the acquiring video request, capture, from the collected video data, video data collected in this time period as second video data according to the start instant and the end instant of a predetermined time period. And the second video data is sent to the above terminal and subsequently is sent, by the terminal, to the server.

In the embodiment, the predetermined time period is the same as that of the embodiment shown in FIG. 2. The predetermined time period could be any reasonable time periods and the present disclosure doesn't limit to it thereof.

FIG. 3A is a flowchart illustrating a method for managing video data according to another exemplary embodiment. As shown in FIG. 3A, the method may be applied to a server and includes the following steps.

In step 301, receive, from a first terminal corresponding to a first vehicle, a first request for acquiring first video data.

In the embodiment, the first terminal corresponding to a first vehicle is a terminal which builds a communication connection with a car recorder installed in the first vehicle. After an accident happens to the first vehicle, the first terminal sends to a server a first request for acquiring first video data. the first video data is driving record data of a second vehicle within a predetermined time period around happening of the accident, and the second vehicle is a vehicle within a predetermined range around the first vehicle when the accident happens.

In the embodiment, the predetermined time period may be any reasonable time period. For example, it may start before the accident with a 3-minutes or a 1-minute time period and may end correspondingly after the accident with a 3-minutes or a 1-minute time period. Also, it may start before the accident with a 1-minute time period and may end after the accident with a 2-minutes time period. The present disclosure doesn't limit to it thereof.

In the embodiment, the predetermined range may not be limited if it is reasonable. The predetermined range includes the position of the first vehicle which an accident happens to. For example, the range may be a circular scope which is centered on the position where an accident happens to the first vehicle and have a 20-meters radius. Or, the range may be centered on the position where an accident happens to the first vehicle and have a rectangular scope with a 20-meters length of side. Or the range may be centered on the position where an accident happens to the first vehicle and be scope of the road whose length is 20 meters. The present disclosure doesn't limit to it thereof.

In the embodiment, the first request may include information of the first vehicle which is about the location and the time at the time of which the accident happens. A search condition of a second vehicle is consisted of the information of the first vehicle which is about the location and the time at the time of which the accident happens such that the server searches for the second vehicle and acquires the driving record data of the second vehicle to be as first video data.

In step 302, acquire, as first video data, driving record data of a second vehicle within a predetermined time period around happening of the accident.

In the embodiment, the server may acquire, as first video data, driving record data of a second vehicle within a predetermined time period around happening of the accident based on the first request. Specifically, the first request may include a search condition of a second vehicle, and the search condition may be consisted of the information of the first vehicle which is about the location and the time at the time of which the accident happens. Firstly, from the first request, acquire the above search condition.

Secondly, search for a second vehicle according to the search condition. In the embodiment, the terminal building a communication connection with a car recorder installed in the first vehicle sends to a server in real time or with a predetermined period the information which is about the current location and the corresponding time. The information could be correlated and processed by the server to generate a location log of vehicles. When the server receives the first request, from the location log of vehicles, searches for a vehicle within a predetermined range around the first vehicle when the accident happens as the second vehicle.

Thirdly, send to a second terminal corresponding to the second vehicle a second request for acquiring driving record data of the second vehicle within a predetermined time period around happening of the accident. The second terminal corresponding to the second vehicle is a terminal which builds an communication connection with a car recorder installed in the second vehicle. In the embodiment, when the terminal corresponding to the vehicle sends data to the server, an apparatus identification of the terminal and a identification of the corresponding vehicle are sent to the server. After the second vehicle is searched by the server, determine the second terminal. Then send to the second terminal a second request including the start instant and the end instant of a predetermined time period. After the second terminal receives the second request, send to a car recorder of the second vehicle an acquiring data request including the start instant and the end instant of a predetermined time period. After the car recorder of the second vehicle receives the acquiring data request, capture, from the collected video data, video data collected in this time period as first video data according to the start instant and the end instant of a predetermined time period. And the first video data is sent to the second terminal and subsequently is sent, by the second terminal, to the server. Finally, the server receives the driving record data returned by the second terminal.

In step 303, return the first video data to the first terminal.

It is necessary to illustrate that the steps which are the same as the steps shown in FIG. 2 are omitted in FIG. 3A. The relevant descriptions could refer to the embodiment shown in FIG. 2.

According to the above method for managing video data, when an accident happens to a first vehicle, to acquire, from a second vehicle, driving record data within a predetermined time period around happening of the accident, and send the above driving record data to the first vehicle. Accordingly, it could be as much as possible to gather the accident-related video data collected by car recorders, thereby avoiding the waste of valid data and increasing the effective usage rate of the car recorders.

In an optional embodiment, the above method further includes: storing the first video data in accident video data; receiving, as second video data, driving record data of the first vehicle within a predetermined time period around happening of the accident, which is sent by the first terminal; storing the second video data in accident video data.

Generally speaking, the video data relevant with an accident is important reference for investigating the cause of the accident. Accordingly, in the embodiment, the driving record data of the first and the second vehicle within a predetermined time period around happening of the accident can be stored. Specifically, the first and the second video data as well as information could be stored in the accident video data with a correspondence between them, wherein the information is related to the vehicle which an accident happens to and is about the location and the corresponding time at the time of which the accident happens, thereby it is convenient to capture the accident-related video data from the accident video data when investigate the accident.

In an optional embodiment, the above method further includes: receiving a searching condition of accident video data sent by a terminal; searching for, from pre-stored accident video data, target accident video data matching with the searching condition; returning the searched target accident video data.

In the embodiment, any one of terminals could ask for acquiring any accident video data. For example, when investigate the cause of an accident, by a terminal, a investigator could send to a server an request for acquiring accident video data and this request includes a searching condition of accident video data which could be a location or a time of which the accident happens, or be a identification of a vehicle which the accident happens to and the like. After the server receives the searching condition of accident video data, it could search for, from pre-stored accident video data, target accident video data matching with the searching condition. The target accident video data may include the first video data and the second video data, or may include one video segment only, or may include multiple video segments. Finally, return the searched target accident video data to the above terminal.

It should be noted that, although operations of methods of the present disclosure have been described in specific order with reference to the drawings, it is not required or suggested that the operations must be performed in the specific order, or it is not required or suggested that all the illustrated operations must be performed to achieve the desired result. Instead, orders for performing the steps illustrated in the flowcharts may be changed. Additionally or alternatively, some steps may be omitted, several steps may be combined into one step for performing, and/or one step may be divided into several steps for performing.

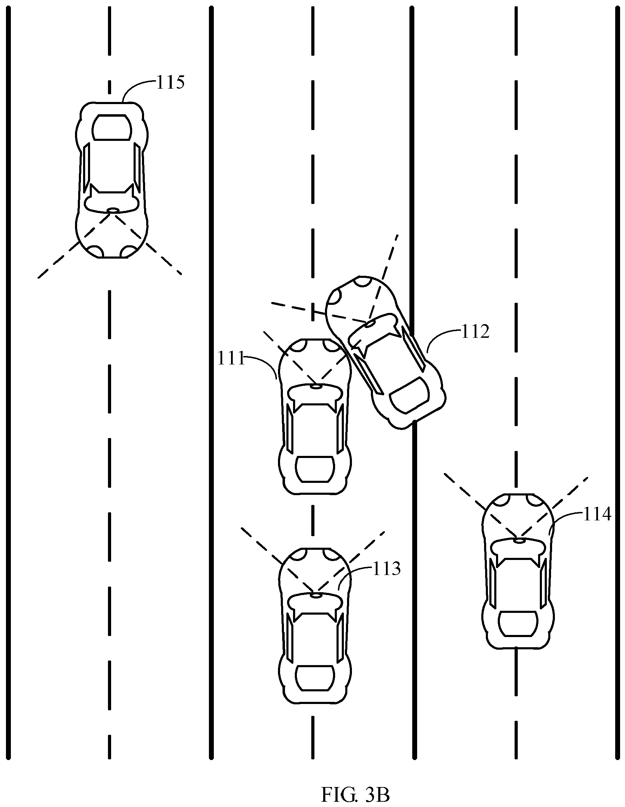

FIG. 3B is a scenario diagram for a video data management method according to an exemplary embodiment. As shown in FIG. 3B, a vehicle 112 hits a vehicle 111 when the vehicle 112 changes its lane in course of driving. This time, a terminal corresponding to the vehicle 111 detects that the accident happens and records information which is about the location of the vehicle 111 and the corresponding time at this time. Subsequently, the terminal corresponding to the vehicle 111 sends to a server a first request including the information which is about the location of the vehicle 111 and the corresponding time at this time.

After the server receives the first request, the server searches for, from a location log, vehicles 112, 113, 114, 115 within a predetermined range around the vehicle 111 when the accident happens according to the information which is about the location of the vehicle 111 and the corresponding time at this time. Subsequently, send to terminals corresponding to vehicles 112, 113, 114, 115 respectively a second request to ask for acquiring driving record data of the vehicle 112, 113, 114, 115 within a predetermined time period around happening of the accident. The second request may include a start instant and an end instant of a predetermined time period.

After the terminals corresponding to the vehicles 112, 113, 114, 115 respectively receive the second request, acquire driving record data of car recorders of the vehicles 112, 113, 114, 115 within a predetermined time period around happening of the accident, and send the above driving record data to the server.

After the server sends the received driving record data to the terminal corresponding to the vehicle 111, by the terminal, the owner of the vehicle 111 could check out the driving record data of the vehicles 112, 113, 114, 115 within a predetermined time period around happening of the accident to acquire more accident evidence.

In correspondence with the above method for managing video data, the present disclosure provides an apparatus for managing video data, and a terminal as well as a server to which the apparatus is applied.

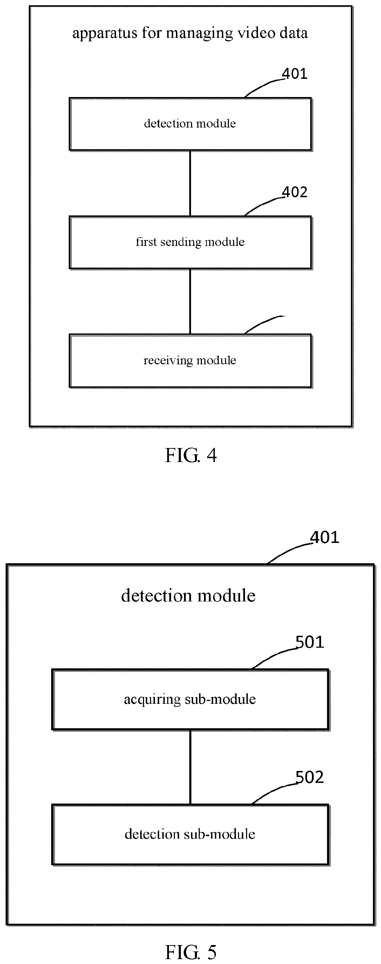

FIG. 4 is a block diagram of an apparatus for managing video data according to an exemplary embodiment. As shown in FIG. 4, the apparatus includes: a detection module 401, a first sending module 402, and a receiving module 403.

The detection module 401 is configured to detect whether an accident happens to a first vehicle.

The first sending module 402 is configured to when it is detected that the accident happens to the first vehicle, send to a server a first request for acquiring first video data, the first video data is driving record data of a second vehicle within a predetermined time period around happening of the accident, the second vehicle is a vehicle within a predetermined range around the first vehicle when the accident happens.

The receiving module 403 is configured to receive the first video data returned from the server.

FIG. 5 is a block diagram of an apparatus for managing video data according to another exemplary embodiment. Based on the apparatus shown in FIG. 4, the detection module 401 may include: an acquiring sub-module 501 and a detection sub-module 502.

The acquiring sub-module 501 is configured to acquire driving data of the first vehicle.

The detection sub-module 502 is configured to detect whether an abnormality occurs in the driving data; and if an abnormality occurs in the driving data, determine that the accident happens to the first vehicle.

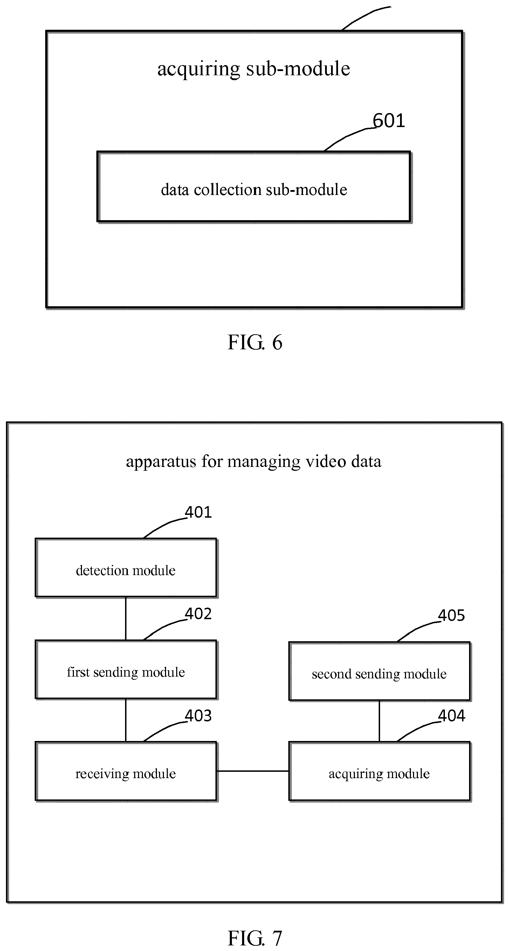

FIG. 6 is a block diagram of an apparatus for managing video data according to another exemplary embodiment. Based on the apparatus shown in FIG. 5, the acquiring sub-module 501 may include: a data collection sub-module 601.

The data collection sub-module 601 is configured to acquire data collected by a gyro sensor as the driving data.

FIG. 7 is a block diagram of an apparatus for managing video data according to another exemplary embodiment. Based on the apparatus shown in FIG. 4, the apparatus may further include: an acquiring module 404 and an acquiring module 405.

The acquiring module 404 is configured to acquire, as second video data, driving record data of the first vehicle within a predetermined time period around happening of the accident.

The second sending module 405 is configured to send the second video data to the server to be stored therein.

It should be understood that the above apparatus could be pre-disposed in a terminal or be installed in a terminal by downloading and the like. Modules and units in the above apparatus may cooperate with the units in a terminal to achieve the scheme for managing video data.

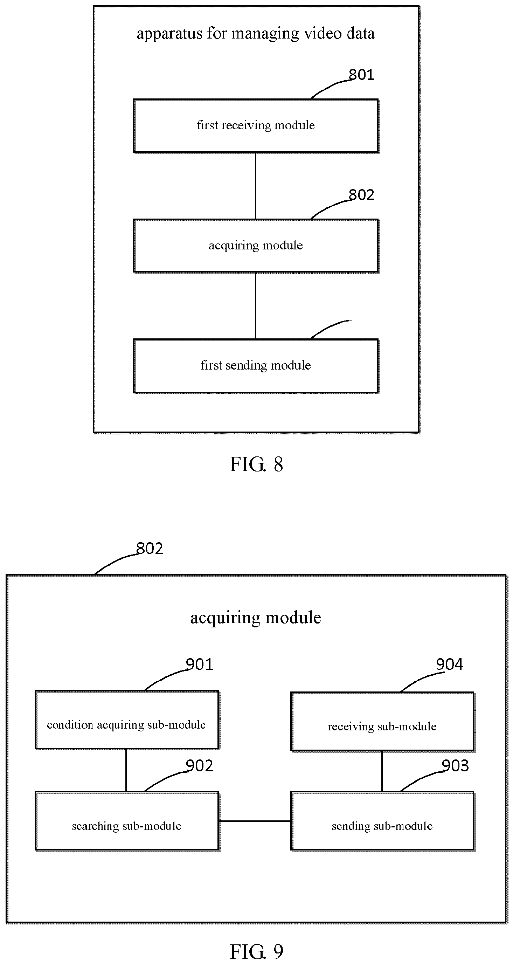

FIG. 8 is a block diagram of an apparatus for managing video data according to another exemplary embodiment. As shown in FIG. 8, the apparatus includes: a first receiving module 801, an acquiring module 802 and a first sending module 803.

The first receiving module 801 is configured to receive, from a first terminal corresponding to a first vehicle, a first request for acquiring first video data.

The acquiring module 802 is configured to acquire, as first video data, driving record data of a second vehicle within a predetermined time period around happening of the accident, the second vehicle is a vehicle within a predetermined range around the first vehicle when the accident happens.

The first sending module 803 is configured to return the first video data to the first terminal.

FIG. 9 is a block diagram of an apparatus for managing video data according to another exemplary embodiment. Based on the apparatus shown in FIG. 8, the acquiring module 802 may include: a condition acquiring sub-module 901, a searching sub-module 902, a sending sub-module 903 and a receiving sub-module 904.

The condition acquiring sub-module 901 is configured to obtain the search condition from the first request.

The searching sub-module 902 is configured to search for the second vehicle according to the search condition.

The sending sub-module 903 is configured to send to a second terminal corresponding to the second vehicle a second request for acquiring driving record data of the second vehicle within a predetermined time period around happening of the accident.

The receiving sub-module 904 is configured to receive the driving record data returned by the second terminal.

The first request includes a search condition of a second vehicle.

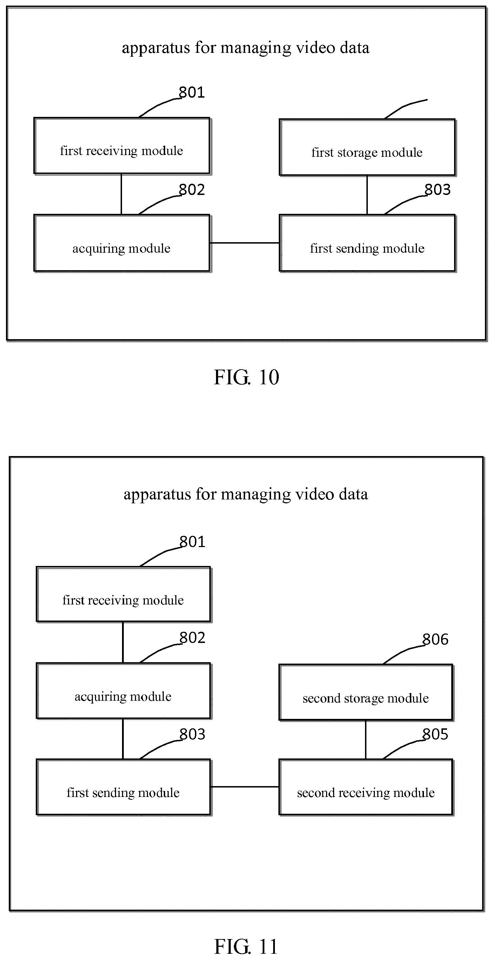

FIG. 10 is a block diagram of an apparatus for managing video data according to another exemplary embodiment. Based on the apparatus shown in FIG. 8, the apparatus may further include: a first storage module 804, which is configured to store the first video data in accident video data.

FIG. 11 a block diagram of an apparatus for managing video data according to another exemplary embodiment. Based on the apparatus shown in FIG. 8, the apparatus may further include: a second receiving module 805 and a second storage module 806.

The second receiving module 805 is configured to receive, as second video data, driving record data of the first vehicle within a predetermined time period around happening of the accident, which is sent by the first terminal.

The second storage module 806 is configured to store the second video data in accident video data.

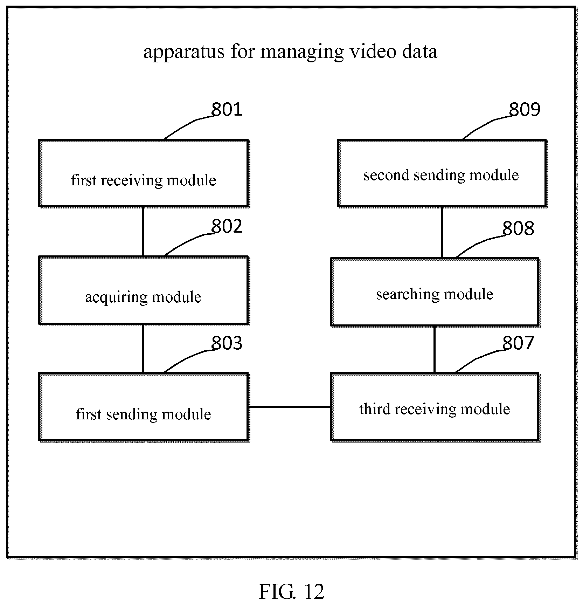

FIG. 12 a block diagram of an apparatus for managing video data according to another exemplary embodiment. Based on the apparatus shown in FIG. 8, the apparatus may further include: a third receiving module 807, a searching module 808 and a second sending module 809.

The third receiving module 807 is configured to receive a searching condition of accident video data sent by a terminal.

The searching module 808 is configured to search for, from pre-stored accident video data, target accident video data matching with the searching condition.

The second sending module 809 is configured to return the searched target accident video data.

It should be understood that the above apparatus could be pre-disposed in a server or be installed in a server by downloading and the like. Modules and units in the above apparatus may cooperate with the units in a server to achieve the scheme for managing video data.

With respect to the apparatus embodiments, since the apparatus embodiments are based on the method embodiments, relevant parts may be referred to the equivalents in the method embodiments. The above-described apparatus embodiments are exemplary only. The units described as separate components may be or may not be physically independent of each other. The element illustrated as a unit may be or may not be a physical unit, which may be either located at a position or deployed on a plurality of network units. Part of or all of the modules may be selected as required to implement the technical solutions disclosed in the embodiments of the present disclosure. Persons of ordinary skills in the art may understand and implement the embodiments without any creative effort.

Correspondingly, the present disclosure provides a terminal which includes: a processor; a memory for storing instructions executable by the processor; wherein the processor is configured to perform:
detecting whether an accident happens to a first vehicle;
when it is detected that the accident happens to the first vehicle, sending to a server a first request for acquiring first video data, the first video data being driving record data of a second vehicle within a predetermined time period around happening of the accident, the second vehicle being a vehicle within a predetermined range around the first vehicle when the accident happens; and
receiving the first video data returned from the server.

Correspondingly, the present disclosure provides a server which includes: a processor; a memory for storing instructions executable by the processor; wherein the processor is configured to perform:
receiving, from a first terminal corresponding to a first vehicle, a first request for acquiring first video data;
acquiring, as first video data, driving record data of a second vehicle within a predetermined time period around happening of the accident, the second vehicle being a vehicle within a predetermined range around the first vehicle when the accident happens; and
returning the first video data to the first terminal.

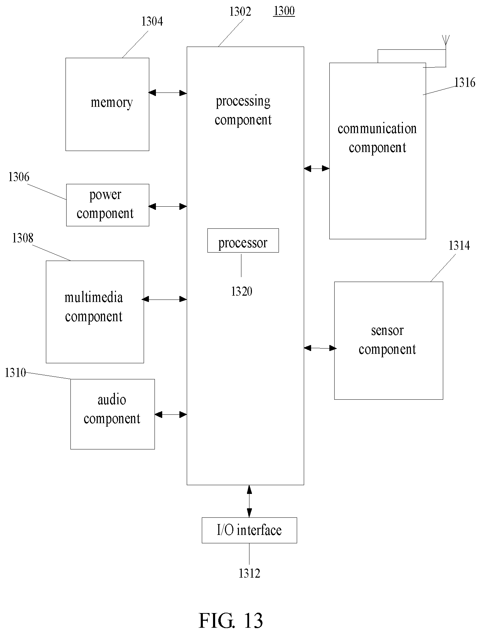

FIG. 13 is a schematic structural diagram illustrating an apparatus 1300 for managing video data according to an exemplary embodiment. For example, the apparatus 1300 may be a mobile phone, a computer, a digital broadcast terminal, a messaging apparatus, a gaming console, a tablet, a medical apparatus, exercise equipment, a personal digital assistant, and the like.

Referring to FIG. 13, the apparatus 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the apparatus 1600, such as the operations associated with display, telephone calls, data communications, camera operations, and recording operations. The processing component 1302 may include one or more processors 1320 to execute instructions to perform all or a part of the steps in the above-described methods. In addition, the processing component 1302 may include one or more modules which facilitate the interaction between the processing component 1302 and other components. For example, the processing component 1302 may include a multimedia module to facilitate the interaction between the multimedia component 1308 and the processing component 1302.

The memory 1304 is configured to store various types of data to support the operations of the apparatus 1300. Examples of such data include instructions for any application or method operated on the apparatus 1300, contact data, phonebook data, messages, pictures, videos, and the like. The memory 1304 may be implemented using any type of volatile or non-volatile memory apparatuses, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the apparatus 1300. The power component 1306 may include a power management system, one or more power supplies, and other components associated with the generation, management, and distribution of power in the apparatus 1300.

The multimedia component 1308 includes a screen providing an output interface between the apparatus 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front camera and/or a rear camera. The front camera and/or the rear camera may receive external multimedia data while the apparatus 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone (MIC) configured to receive an external audio signal when the apparatus 1300 is in an operation mode, such as a call mode, a recording mode, or a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and a peripheral interface module, such as a keyboard, a click wheel, a button, or the like. The buttons may include, but are not limited to, a home button, a volume button, a starting button, and a locking button.

The sensor component 1314 includes one or more sensors to provide status assessments of various aspects of the apparatus 1300. For example, the sensor component 1314 may detect an open/closed status of the apparatus 1300, relative positioning of components, e.g., the display and the keypad, of the apparatus 1300, a change in position of the apparatus 1300 or a component of the apparatus 1300, a presence or absence of user contact with the apparatus 1300, an orientation or an acceleration/deceleration of the apparatus 1300, and a change in temperature of the apparatus 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate communications, wired or wirelessly, between the apparatus 1300 and other apparatuses. The apparatus 1300 may access a wireless network based on a communication standard, such as WiFi, 2G, or 3G, or a combination thereof. In one exemplary embodiment, the communication component 1316 receives a broadcast signal or broadcast associated notification information from an external broadcast management system via a broadcast channel. In one exemplary embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1300 may be implemented with one or more application specific integrated circuits (ASICs), digital signal processors (DSPs), digital signal processing apparatuses (DSPDs), programmable logic apparatuses (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 1304, executable by the processor 1320 in the apparatus 1300, for performing the above-described methods. For example, the non-transitory computer-readable storage medium may be a ROM, a random access memory (RAM), a compact disc read-only memory (CD-ROM), a magnetic tape, a floppy disc, an optical data storage apparatus, or the like.

Other embodiments of the present disclosure will be apparent to those skilled in the art from consideration of the specification and practice disclosed herein. This application is intended to cover any variations, uses, or adaptations of the present disclosure following the general principles thereof and including such departures from the present disclosure as coming within common knowledge or customary technical means in the art. It is intended that the specification and embodiments be considered as exemplary only, with a true scope and spirit of the present disclosure being indicated by the appended claims.

It will be appreciated that the present disclosure is not limited to the exact construction that has been described above and illustrated in the accompanying drawings, and that various modifications and changes can be made without departing from the scope thereof. The scope of the present disclosure is only defined by the appended claims.

## Claims

1. A method for managing video data, comprising:
detecting (201) whether an accident happens to a first vehicle;
when it is detected that the accident happens to the first vehicle, sending (202) to a server a first request for acquiring first video data, the first video data being driving record data of a second vehicle within a predetermined time period around happening of the accident, the second vehicle being a vehicle within a predetermined range around the first vehicle when the accident happens; and
receiving (203) the first video data returned from the server.

2. The method according to claim 1, **characterized in that** said detecting (201) whether an accident happens to a first vehicle comprises:
acquiring driving data of the first vehicle; and
detecting whether an abnormality occurs in the driving data; and if an abnormality occurs in the driving data, determining that the accident happens to the first vehicle.

3. The method according to claim 2, **characterized in that** said acquiring driving data of the first vehicle comprises:
acquiring data collected by a gyro sensor as the driving data.

4. The method according to claim 1, **characterized in that** the method further comprises:
acquiring, as second video data, driving record data of the first vehicle within a predetermined time period around happening of the accident; and
sending the second video data to the server to be stored therein.

5. A method for managing video data, comprising:
receiving (301), from a first terminal corresponding to a first vehicle, a first request for acquiring first video data;
acquiring (302), as first video data, driving record data of a second vehicle within a predetermined time period around happening of an accident, the second vehicle being a vehicle within a predetermined range around the first vehicle when the accident happens; and
returning (303) the first video data to the first terminal.

6. The method according to claim 5, **characterized in that** the first request comprises a search condition of the second vehicle;
wherein said acquiring (302) driving record data of a second vehicle within a predetermined time period around happening of an accident comprises:
obtaining the search condition from the first request;
searching for the second vehicle according to the search condition;
sending, to a second terminal corresponding to the second vehicle, a second request for acquiring driving record data of the second vehicle within a predetermined time period around happening of the accident; and
receiving the driving record data returned by the second terminal.

7. The method according to claim 5, **characterized in that** the method further comprises:
storing the first video data in accident video data.

8. The method according to claim 7, **characterized in that** the method further comprises:
receiving, as second video data, driving record data of the first vehicle within a predetermined time period around happening of the accident, which is sent by the first terminal; and
storing the second video data in accident video data.

9. The method according to claim 8, **characterized in that** the method further comprises:
receiving a searching condition of accident video data sent by a terminal;
searching for, from pre-stored accident video data, target accident video data matching with the searching condition; and
returning the searched target accident video data.

10. An apparatus for managing video data, comprising:
a detection module (401), configured to detect whether an accident happens to a first vehicle;
a first sending module (402), configured to when it is detected that the accident happens to the first vehicle, send to a server a first request for acquiring first video data, the first video data being driving record data of a second vehicle within a predetermined time period around happening of the accident, the second vehicle being a vehicle within a predetermined range around the first vehicle when the accident happens; and
a receiving module (403), configured to receive the first video data returned from the server.

11. The apparatus according to claim 10, **characterized in that** the detection module (401) comprises:
an acquiring sub-module (501), configured to acquire driving data of the first vehicle;
a detection sub-module (502), configured to detect whether an abnormality occurs in the driving data; and if an abnormality occurs in the driving data, determine that the accident happens to the first vehicle.

12. An apparatus for managing video data, comprising:
a first receiving module (801), configured to receive, from a first terminal corresponding to a first vehicle, a first request for acquiring first video data;
an acquiring module (802), configured to acquire, as first video data, driving record data of a second vehicle within a predetermined time period around happening of the accident, the second vehicle being a vehicle within a predetermined range around the first vehicle when the accident happens; and
a first sending module (803), configured to return the first video data to the first terminal.

13. A terminal, comprising:
a processor;
a memory for storing instructions executable by the processor;
wherein the processor is configured to perform the steps of any of claims 1 to 3.

14. A server, comprising:
a processor;
a memory for storing instructions executable by the processor;
wherein the processor is configured to perform the steps of any of claims 5 to 9:
receiving, from a first terminal corresponding to a first vehicle, a first request for acquiring first video data;
acquiring, as first video data, driving record data of a second vehicle within a predetermined time period around happening of the accident, the second vehicle being a vehicle within a predetermined range around the first vehicle when the accident happens; and
returning the first video data to the first terminal.

15. A computer program which, when being executed on a processor of an apparatus, performs a method according to any one of claims 1 to 9.
